# EUROPEAN PATENT SPECIFICATION

(11) **EP 1 368 259 B1**
(45) Date of publication and mention of the grant of the patent: **18.10.2006**
(21) Application number: 02702976.8
(22) Date of filing: 08.03.2002
(51) Int. Cl.: B65G 21/06

(54) **SYSTEM FOR COLLECTING PRODUCTS, SUCH AS AGRICULTURAL, HORTICULTURAL OR CULTIVATED PRODUCTS**
SYSTEM ZUM SAMMELN VON PRODUKTEN WIE LANDWIRTSCHAFTLICHEN ODER GÄRTNEREI PRODUKTEN
SYSTEME DE COLLECTE DE PRODUITS TELS QUE DES PRODUITS AGRICOLES, HORTICOLES OU CULTIVES

(30) Priority: 08.03.2001 NL 1017538
(43) Date of publication of application: 10.12.2003
(73) Proprietor: Oskam, Marius, 3985 MH Werkhoven (NL)
(72) Inventor: Oskam, Marius, 3985 MH Werkhoven (NL)
(74) Representative: Wittop Koning, Tom Hugo
(86) International application number: PCT/NL2002/000155
(87) International publication number: WO 2002/070379

(56) References cited:
- EP-A- 0 785 480
- FR-A- 2 643 622
- GB-A- 339 465
- GB-A- 2 148 834
- US-A- 2 710 683
- US-A- 3 710 927
- US-A- 6 116 410

## Description

The present invention relates to a system for collecting products, such as agricultural, horticultural or cultivated products, and to a number of methods in which a system of this type is used.

US 2,710,683 representing the prior art according to the preamble of claim 1 discloses a harvesting machine in particular for harvesting strawberries and the like, in which a portable conveyor is placed above or close to a row of plants. There are a number of pickers distributed along the row of plants, who place the picked products onto the conveyor.

The conveyor comprises an endless conveyor belt, two end roller devices and drive means for driving the conveyor belt. The conveyor also comprises a metal channel, through which the top section of the endless conveyor belt runs. When the conveyor belt is tightened by means of tensioning means on the two end roller devices, this tightening force is absorbed by the channel, so that the end roller devices are clamped securely onto the channel.

When the pickers have picked one row of plants, the entire device can be lifted by a number of pickers and carried over the plants to a next row of plants.

Therefore, when using this known conveyor, it is necessary to have sufficient people for it to be possible to lift and move the conveyor together. This is not always the case with lengths of over hundred metres. Moreover, these people must be able to carry the weight of the conveyor together with the metal channel.

Furthermore, a conveyor of this type cannot be used in, for example, an orchard, since it is not possible to lift the conveyor over a row of trees.

If it is desired to use a conveyor of this type, for each row of trees it will have to be taken apart and put together again in the next row. These operations of taking apart and re-assembling take up considerable time, and consequently it is not appropriate to use a conveyor of this type in an orchard or the like.

As an alternative, NL 8603284 discloses a device for collecting fruit in an orchard. This device comprises a vehicle which travels slowly past a row of fruit trees. During picking, the fruit pickers walk along with the vehicle. On the vehicle, there are arms which project from the vehicle so that they are at an arm's distance from the fruit pickers. There are conveyor belts in each of these arms. The picked fruit is placed onto a conveyor belt of this type by the fruit pickers. Via the conveyor belt and other conveyor belts, the fruit is conveyed to a fruit container, for example a box, which is positioned on the vehicle. When a fruit container has been filled, it is immediately placed onto the ground in situ. Another vehicle picks up the heavy fruit-filled fruit containers in order for them to be transported to a barn or the like for further processing.

A drawback of the above design is that the vehicle damages the soil and the grass on it while it is travelling between the fruit trees. Moreover, additional damage to the soil is caused by the vehicles which pick up the heavy filled fruit containers which have been put down between the rows of fruit trees. The damaged soil, especially if it is wet, makes it more difficult for the fruit pickers to move between the fruit trees.

The object of the invention is to provide an improved device for collecting products, such as agricultural, horticultural and cultivated products, which eliminates one or more drawbacks of the known devices.

This object is achieved by a system for collecting products, such as agricultural, horticultural or cultivated products, comprising a conveyor for conveying the products, which conveyor comprises two end roller devices, an endless conveyor belt which is arranged between the two end roller devices, and drive means for driving the endless conveyor belt, characterized in that each end roller device is provided with its own independently supported supporting structure which is designed to absorb the force exerted by the conveyor belt.

With a conveyor of this type with its own independently supported supporting structure for each end roller device, there is no need for a structural element between the two end roller devices which absorbs the force exerted by the endless conveyor belt.

The supporting structure may, for example, be the frame of the end roller device itself or a section thereof, such as for example the frame-section which is supported directly on the ground below. In this case, it is also possible to use a soil anchor or another fixedly disposed structure with which the end roller device interacts. It is also possible for the supporting structure to be formed by a tractor or lorry or the like to or on which the end roller device is secured.

The system according to the invention is suitable for collecting agricultural, horticultural or cultivated products which are picked or harvested from plants growing in rows in the field or in a greenhouse, such as vegetables, flowers, flower bulbs and potatoes, and is particularly suitable for collecting fruit, such as apples, pears and the like which is harvested from fruit trees. The system is suitable in particular for delicate agricultural or horticultural products which have to be harvested with care, so that damage to these products is prevented.

By disposing the system according to the invention next to a large part of the length of a row of plants, preferably the entire length, it is not necessary to move the system during collection of the products from the row of plants. Moreover, the conveyor will generally be positioned between two rows of plants, and the products from both rows of plants can be collected directly by the conveyor without the system having to be moved in the meantime. Since the products which are placed onto the conveyor are discharged towards the ends of the conveyor, there is no need for heavy boxes containing products to be picked up between the rows of plants, and the soil is not damaged at those locations. At the end of the rows of plants, the ground is usually hardened and damage caused by the movement of heavy vehicles does not occur or occurs to a much lesser extent.

Furthermore, the system is easy to move. This is possible in particular on account of the absence of a structural element between the two end roller devices for absorbing the force exerted by the conveyor belt. It is preferable for the conveyor to be equipped with an electric drive, so that there are no harmful exhaust gases released in the vicinity of the people who are harvesting, for example fruit pickers.

An advantage is that the system according to the invention makes possible a method for collecting products, it being possible for the conveyor to be moved quickly and easily. The system according to the invention requires less work of the people who are, for example, picking or harvesting, and moreover the system allows simple sorting of products into two or more classes. The methods in which use is advantageously made of the system according to the invention are described in claims 25-29.

Rolling up the endless conveyor belt in order to move the conveyor can be done in various ways. The conveyor belt can be removed from both end roller devices before being rolled off. In this case, it is possible to make use of a quick-acting closure, or the conveyor belt may be pushed off the end rollers.

It is also possible for the end rollers to be removed from the end roller devices. The end rollers can then be removed before the endless conveyor belt is rolled up. It is also possible for the endless conveyor belt to be rolled up onto one or both of the removed end rollers.

If the conveyor belt has been detached from at least one of the end roller devices, it is possible to use a separate trolley, which comprises a roller or device for an end roller to be placed in, in order to roll up the conveyor belt.

The endless conveyor belt can then be rolled up by hand or using a drive provided for this purpose. This drive may comprise an electric motor but may also be a mechanical transmission, in which case the roller or end roller is mechanically coupled to the wheels of the trolley. The use of a trolley of this type has the advantage, in particular, that the soil is not damaged by a heavy tractor and that there are no emissions of exhaust gases in the vicinity of the plants. Moreover, it has been found that the drive of the end roller device is often too strong to roll up the conveyor belt.

The endless conveyor belt can also be rolled up onto one of the end rollers of an end roller device, with the endless conveyor belt having been removed from the other end roller, for example by using a quick-acting closure.

Furthermore, it is also possible to roll up the endless conveyor belt onto one or both of the end roller devices without removing the conveyor belt from the end roller devices. While the conveyor belt is being rolled up onto one or both end roller devices, the two end roller devices then have to be moved towards one another.

According to another method, it is possible to provide two or more endless conveyor belts which are used alternately for the system according to the invention. It is then not necessary for the endless conveyor belt to be moved immediately together with the end roller devices. The time required to roll up and unroll the conveyor belt is thus saved. The pickers can continue picking the fruit immediately, while one person has time to roll up the endless conveyor belt and move it to a different row in order then to unroll the endless conveyor belt at that row.

It is preferable for the system to be provided with tensioning means, by means of which the endless conveyor belt is pulled and kept taut between the two end roller devices. The supporting structure advantageously comprises these tensioning means. Furthermore, the system advantageously comprises first and/or second intermediate support means, which support the upper section and lower section, respectively, of the endless conveyor belt between the two end roller devices.

In a preferred embodiment, the endless conveyor belt comprises a plurality of wire-like elements which extend in the longitudinal direction of the endless conveyor belt, for example in the form of cables. The two ends of each wire-like element are in each case connected to one another. The wire-like element may also be an endless wire-like element. A conveyor belt which is made from separate wire-like elements of this type is lightweight. Consequently, a low tensioning force is required in order to apply the tension to the conveyor belt. This is advantageous in particular for conveyors which extend over great lengths.

In this case, the endless conveyor belt preferably comprises a plurality of spacers which connect the separate wire-like elements, which run substantially parallel, to one another at a certain distance from one another. It is advantageous for the distance between two adjacent wire-like elements to be less than the diameter of the product which is conveyed on the endless conveyor belt. Due to the wire-like elements the endless conveyor belt is not sensitive to wind and is lightweight, with the result that the system comprising the conveyor belt is easy to move. The ends of the wire-like elements can preferably be connected to one another at various locations by means of a quick-acting closure, so that the length of the endless conveyor belt can easily be matched to the required length for an orchard. In practice, this length varies between approximately one hundred and three hundred metres.

Further preferred embodiments according to the invention form the subject matter of the dependent claims.

The system according to the invention will be explained in more detail below with reference to the appended drawings, in which:
Figure 1 shows a plan view of a preferred embodiment of the system according to the invention,
Figure 2 shows a side view of the embodiment from Figure 1, and
Figure 3 shows a perspective view of the embodiment shown in Figure 1.

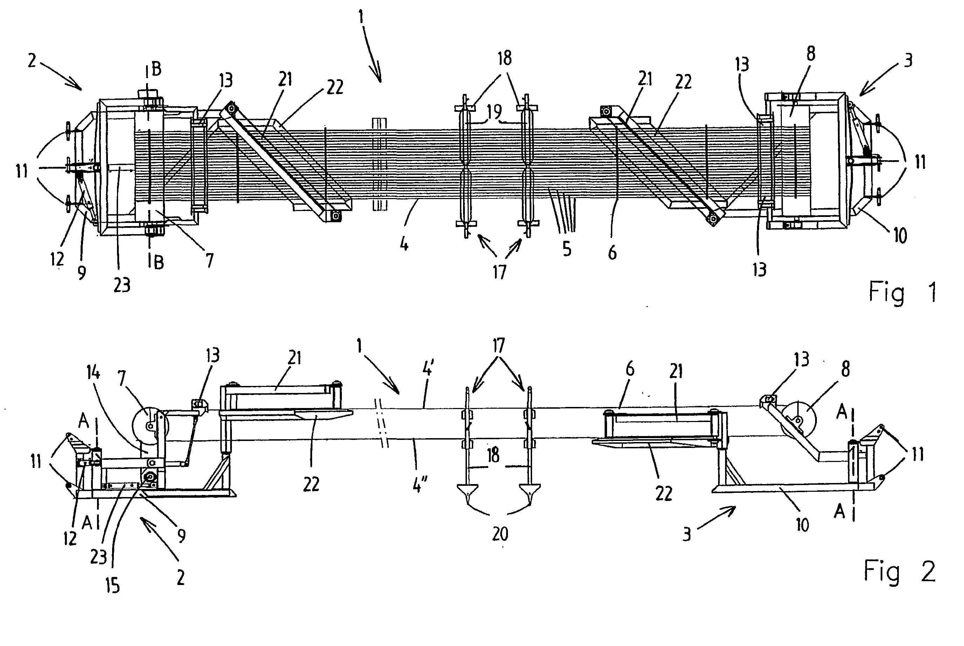

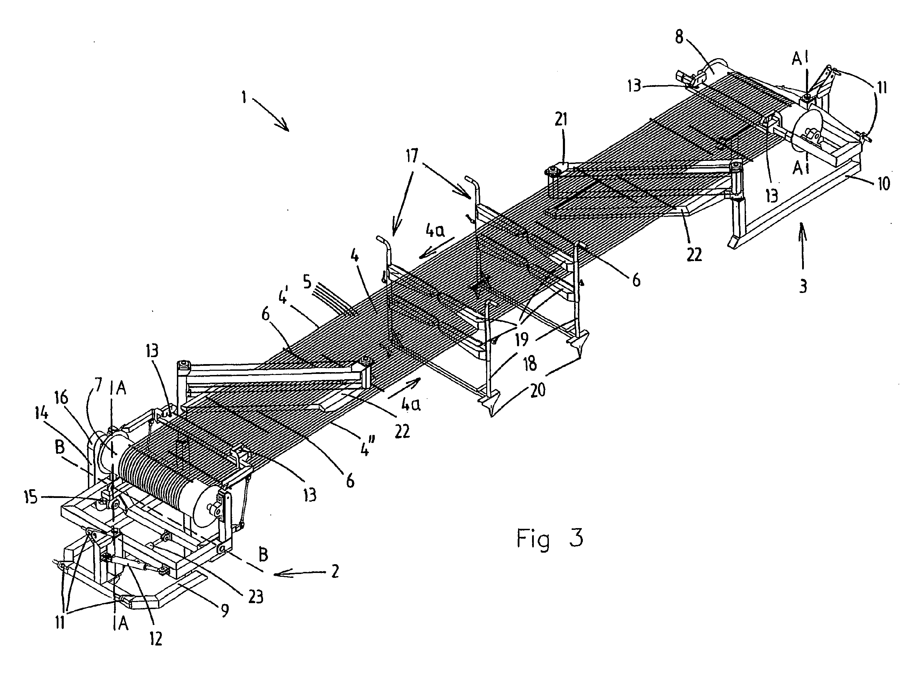

Figures 1-3 show a preferred embodiment of the system according to the invention, denoted overall by reference number 1. The end roller devices 2 and 3 are arranged at the two ends of the system 1. The endless conveyor belt 4 is tensioned between the end roller devices 2, 3. The endless conveyor belt 4 may be produced from a material which is customary for an application of this type, such as cloth or canvas made from plastics or natural woven material. It is preferable for the endless conveyor belt 4 to be produced from wire-like elements 5, preferably with a high strength and low elongation. The ends of the wire-like elements 5 are in each case connected to one another in order in this way to form an endless cable. These endless cables are connected to one another and are held at a distance from one another by means of spacers 6. Each spacer 6 comprises one or more slats or bars, in which holes or slots are formed. The wire-like elements 5 are secured in these holes or slots by clamping. The clamping connection may, for example, be effected by a clamping fit in the holes or slots or by clamping two slats or bars on top of one another, with the cables between them. The spacers 6 also serve as drivers to help to move the fruit along with the endless conveyor belt. This is advantageous in particular if the endless conveyor belt slopes upwards.

Each end roller device 2, 3 comprises an end roller 7 and 8, respectively. The end rollers 7, 8 can advantageously be removable from the end roller devices. The endless conveyor belt 4 runs around the two end rollers 7, 8. In this way, an upper section 4' and a lower section 4" of the endless conveyor belt are obtained. Each end roller device 2, 3 comprises a frame 9, 10, which in this case is positioned on the solid ground of an orchard. The frame 9, 10 is designed, for example, as a steel frame and is furthermore provided with means 11, such as for example pins, by which a tractor or the like can easily lift and move the end roller device. To ensure that the endless conveyor belt 4 does not run off an end roller 7 or 8, the centre axis of each end roller 7, 8 must be at right angles to the running direction of the endless conveyor belt 4. It is very difficult, when positioning the frames 9, 10, for them to be positioned so carefully that the centre axes of the two end rollers 7, 8 run precisely parallel to one another. Therefore, the section of the end roller device 2, 3 to which the end roller 7, 8 is secured can pivot about a vertical axis A-A with respect to the frame 9, 10. In this way, the centre axis of the end roller 7, 8 can be rotated in the running direction of the endless conveyor belt.

By way of example, a hydraulic cylinder 12 is provided between the frame 9, 10 and the pivotable section of the end roller device 7, 8 by means of which cylinder the pivotable section can be rotated and fixed in such a way that the end roller 7, 8 is at right angles to the running direction of the endless conveyor belt 4. The hydraulic cylinder 12 is actuated by a signal from at least one sensor 13. The sensor 13 measures the position of the endless conveyor belt 4 with respect to the end roller 7, 8. If the endless conveyor belt 4 deviates excessively from its centre position on the end roller 7, 8, the end roller 7, 8 is rotated by means of the hydraulic cylinder 12 in such a manner that the endless conveyor belt 4 returns to its centre position.

Instead of a system with a sensor which actuates a hydraulic cylinder, set screw or the like, it is also possible to create a low-friction pivotable structure which automatically rotates into the correct position as a result of the tension in the endless conveyor belt. It is also possible for a set screw, hydraulic cylinder or the like to be manually adjusted when it becomes apparent that the endless conveyor belt is running off the end rollers.

The end roller device 2 is provided with drive means 14 to drive the end roller 7. The drive means comprise an electric motor 15 and a transmission 16. As a result of the end roller 7 being driven, the tension in the endless conveyor belt 4 also drives the endless conveyor belt 4.

The driven end roller 7 is provided with two flanges which are located on either side of the endless conveyor belt 4. When the conveyor 1 is to be moved, a bar or the like is fitted into the openings in these flanges. When the end roller 7 is then driven, the endless conveyor belt 4 is rolled up onto the end roller 7. The quick-acting closures which connect the ends of the wire-like elements 5 of the endless conveyor belt 4 to one another may be removed beforehand. If this does not take place, the end roller devices 2, 3 have to be moved towards one another while the belt is being rolled up or the endless conveyor belt 4 has to be moved from the undriven end roller 8.

Intermediate support means 17, which are disposed between the two end roller devices 2, 3, are formed by a frame 18 and a number of support arms 19 which support the endless conveyor belt 4. The frame 18 is pushed into the soil by means of pointed projections 20 provided for this purpose. The support arms 17, which support both the top section 4' and the bottom section 4" of the endless conveyor belt 4, are vertically adjustable with respect to the frame, in order to allow the endless conveyor belt 4 to run substantially horizontally. To enable the lower section 4" of the endless conveyor belt 4 to be positioned on a support arm 19, in the design shown the support arms 19 are designed in such a manner that they can pivot with respect to a vertical section of the frame 18.

The intermediate support means 17 may also be formed by other structures. In an orchard, there are often stakes present which have to support the trees while they are growing. By way of example, it is possible to mount a support frame on these stakes. It is also possible for a bracket to be secured to the stakes, in which bracket a pipe or post, for example a PVC tube, from one row of trees to the next may lie. The endless conveyor belt can then be guided over these pipes or posts. In practice, it has been found that, in the preferred embodiment of the invention which is illustrated, a support frame has to be positioned every ten to twenty-five metres.

At the end of the endless conveyor belt 4 there are means for removing the fruit situated on the endless conveyor belt 4. These means for removing the fruit are designed as an arm 21 which extends obliquely over the endless conveyor belt 4. This arm 21 moves the fruit sideways towards the side of the endless conveyor belt, where a known device (not shown) is located for placing the fruit into a fruit container. To facilitate the sideways movement of the fruit over the wire-like elements 5 of the endless conveyor belt 4, at that location there is a platform 22 over which the wire-like elements are guided. Instead of hanging between the wire-like elements 5, the fruit is now supported on the platform 22, with the result that it adopts a slightly higher position with respect to the endless conveyor belt 4. If the oblique arm 21 for removing the fruit from the endless conveyor belt is not present, the device for placing the fruit into a fruit container may also be disposed on that side of an end roller 7, 8 which is remote from the conveyor belt 4.

A section of the first end roller device which comprises the driven end roller 7 can pivot about a horizontal axis B-B with respect to the frame 9. A hydraulic cylinder 23 is arranged between this pivotable section and the frame. This hydraulic cylinder can be used to move the end roller 7 from and towards the second end roller device 3. In this way, it is possible to create a certain tension in the endless conveyor belt 4. This tension is necessary in order to obtain a substantially horizontal plane in the endless conveyor belt 4 and to drive the endless conveyor belt 4. Moreover, the tension can be used for aligning the centre axis of the end roller 7, 8 at right angles to the running direction of the endless conveyor belt 4.

If the above-described system 1 according to the invention is disposed between two rows of trees, pickers can pick fruit on both sides of the endless conveyor belt 4 and then place the fruit onto the endless conveyor belt 4. The pickers are then located between the conveyor belt 4 and the row of trees. In practice, given the customary dimensions for a walkway, the pickers, with a width of one metre for the endless conveyor belt, have sufficient space to move, but the fruit tree and the endless conveyor belt also remain within an arm's reach.

The upper section 4' and the lower 4", running in the opposite direction, of the endless conveyor belt 4 can be used to sort two classes of fruit directly during picking, for example apples from the tree and windfall apples which are already lying on the ground, by placing one class onto the upper section and the other class onto the lower section of the endless conveyor belt. In this way, the fruit belonging to the two classes is conveyed to the opposite ends of the row of fruit trees and collected in fruit containers. With a direction of movement 4a of the upper section 4' and the lower section 4" of the endless conveyor belt 4, the arm 21 located in the vicinity of end roller 7 discharges fruit from the upper section 4', while the arm 21 located in the vicinity of end roller 8 discharges fruit from the lower section 4".

It is also possible for the fruit which is on the upper section 4' or the lower section 4" of the endless conveyor belt 4 to be sorted by separately discharging fruit lying on different sides of the endless conveyor belt at the end of the endless conveyor belt. In this way, it becomes possible to differentiate between four or more classes during picking and for these classes to be discharged as such. Furthermore, with the system according to the invention it is easily possible to treat the fruit to protect against storage diseases and the like at the end of the endless conveyor belt.

If the system 1 is to be moved to a different walkway between two rows of trees, first of all the tension is removed from the endless conveyor belt by retracting the hydraulic cylinder 23. Then, after the intermediate support means 17 have also been removed, the endless conveyor belt 4 is rolled up onto the driven end roller 7 by fitting a bar or the like through the openings in the flanges of the end roller 7. For this purpose, the endless conveyor belt 4 is uncoupled at the quick-acting closure, or the end roller devices 2, 3 are moved towards one another. In the second case, by way of example a tractor lifts the second end roller device 3 and reverses towards the first end roller device 2, while the belt is being rolled up. Then, the system is transferred to the next walkway. Moreover, the first end roller device 2 is also lifted by a second tractor, and the two tractors drive to the next walkway. Here, in more or less the reverse order to the steps described above, the system 1 is assembled again for subsequent use.

The system according to the invention has been described above in connection with the collection of fruit, such as apples and the like. It will be clear that the system according to the invention is also suitable, for example, for conveying other agricultural, horticultural and cultivated products, such as vegetables, potatoes, flowers, flower bulbs and the like.

## Claims

1. System (1) for collecting products, such as agricultural, horticultural or cultivated products, comprising a conveyor for conveying the products, which conveyor comprises:
- two end roller devices (2, 3),
- an endless conveyor belt (4) which is arranged between the two end roller devices, and
- drive means (14) for driving the endless conveyor belt,
**characterized in** at each end roller device (2, 3) is provided with its own independently supported supporting structure which is designed to absorb the force exerted by the conveyor belt.

2. System according to claim 1, **characterized in that** the system comprises tensioning means, by means of which the endless conveyor belt is pulled and kept taut between the two end roller devices.

3. System according to claim 1 or 2, **characterized in that** the system also comprises first intermediate support means for supporting at least an upper section of the endless conveyor belt between the two end roller devices.

4. System according to one or more of claims 1-3, **characterized in that** the endless conveyor belt comprises a plurality of wire-like elements which extend in the longitudinal direction of the conveyor belt, the two ends of each wire-like element in each case being connected to one another.

5. System according to claim 4, **characterized in that** the endless conveyor belt furthermore comprises a plurality of spacers which connect the separate wire-like elements to one another substantially parallel to and at a certain distance from one another.

6. System according to claim 5, **characterized in that** each spacer comprises one more slats or bars, in which there are holes or slots, it being possible for the wire-like elements to be fitted in these holes or slots.

7. System according to one or more of claims 4-6, **characterized in that** the ends of the wire-like elements are fixed to one another by means of a quick-acting closure and can be connected to one another at various locations along the length of the wire-like elements, so that the endless conveyor belt with corresponding wire-like elements can be formed in a number of different lengths.

8. System according to one or more of the preceding claims, **characterized in that** each end roller device comprises an end roller, around which the endless conveyor belt is turned via a section of the mantle of the end roller, which end roller can preferably be taken out of the end roller device.

9. System according to claim 8, **characterized in that** each end roller is secured pivotably with respect to a frame, the centre axis of the end roller being pivotable with respect to the running direction of the endless conveyor belt.

10. System according to one or more of the preceding claims, **characterized in that** the system also comprises aligning means, by means of which each end roller can be positioned substantially at right angles to the running direction of the endless conveyor belt, in such a manner that the endless conveyor belt does not run off the end roller.

11. System according to claim 10, **characterized in that** the aligning means comprise at least one set screw, hydraulic cylinder or the like, which can be used to rotate the centre axis of an end roller and secure it with respect to the running direction of the endless conveyor belt.

12. System according to one of claims 10 or 11, **characterized in that** the set screw, hydraulic cylinder or the like is actuated by a signal from a sensor, which sensor determines the position of the endless conveyor belt with respect to the end roller which is to be pivoted by the set screw, hydraulic cylinder or the like.

13. System according to claim 8 or 9, **characterized in that** the end roller can pivot freely with respect to the frame.

14. System according to claim 8, **characterized in that** the drive means comprise an electric motor which drives at least one of the end rollers.

15. System according to claim 14, **characterized in that** at least the driven end roller is provided with two flanges, between which there is an endless conveyor belt.

16. System according to claim 15, **characterized in that** there are openings in the flanges, parallel to the centre axis and at a distance from the centre axis which is greater than the distance from the centre axis to the mantle of the end roller, through which openings a bar or the like can be fitted.

17. System according to one or more of the preceding claims, **characterized in that** the system comprises second intermediate support means for supporting a bottom section of the endless conveyor belt between the two end roller devices.

18. System according to one or more of claims 3-17, **characterized in that** the first and/or second intermediate support means comprise a frame which can be positioned on the ground and one or more support arms which are secured to the frame and are vertically adjustable with respect to the frame.

19. System according to claim 18, **characterized in that** on the underside of the frame there are spikes which can be fitted into the ground.

20. System according to claim 18 or 19, **characterized in that** the one or more support arms are arranged in such a manner that they can pivot in a substantially horizontal direction with respect to the vertical upright of the frame.

21. System according to one or more of preceding claims, **characterized in that** in the vicinity of at least that end of the conveyor towards which a product is conveyed, there are removal means, by means of which the product which approaches the end of the conveyor is removed from the endless conveyor belt.

22. System according to claim 21, **characterized in that** the removal means comprise at least one arm which extends above and obliquely over the top surface of an upper section and/or lower section of the endless conveyor belt, the distance between the arm and the upper surface of the endless conveyor belt being less than the diameter of the product.

23. System according to one or more claims 2-22, **characterized in that** the tensioning means comprise one or more hydraulic cylinders which pull at least the end rollers of the two end roller devices apart, in such a manner that a certain tension is produced in the endless conveyor belt.

24. System according to claim 23, **characterized in that** the hydraulic cylinder is arranged between the frame and a section of the end roller device to which the end roller is secured, the section being movable, by means of a hydraulic cylinder, with respect to the frame, in such a manner that the end roller can be moved away from and towards the end roller device located at the other end of the conveyor.

25. Method for collecting products, such as agricultural, horticultural and cultivated products, the products being collected using a conveyor of a system (1) according to one or more of claims 1-24.

26. Method according to claim 25, **characterized in that** the products are sorted into two classes while they are being collected, a product belonging to one class being placed onto the top section of the endless conveyor belt and a product belonging to the other class being placed onto the bottom section of the endless conveyor belt, so that the product belonging to one class which has been placed onto the endless conveyor belt is conveyed to one end of the conveyor, and the product belonging to the other class is conveyed to the other end of the conveyor.

27. Method for moving a conveyor when using a system (1) according to one or more of claims 1-24, **characterized by** the following steps:
- relieving the tension of the endless conveyor belt (4),
- rolling up the endless conveyor belt, the endless conveyor belt optionally being removed from one or both of the end roller devices (2, 3),
- moving the two separate end roller devices,
- unrolling the endless conveyor belt, and
- tensioning the endless conveyor belt between the two end roller devices, if necessary after the conveyor belt has been fitted to an end roller device from which the endless conveyor belt had been removed.

28. Method for moving a conveyor when using a system (1) according to one or more of claims 1-24, **characterized by** the following steps:
- relieving the tension of the endless conveyor belt,
- removing the endless conveyor belt from the two end roller devices,
- moving the driven and undriven end roller devices,
- fitting the endless conveyor belt or a second endless conveyor belt to the end roller devices, and
- tensioning the endless conveyor belt or the second endless conveyor belt on the end roller devices by means of the tensioning means.

29. Method according to claim 27 or 28, **characterized by** the fact that one or more of the following steps are then carried out:
- the moving and fitting of the intermediate support means between the two end roller devices,
- placing the centre axis of each end roller at right angles to the running direction of the endless conveyor belt, with the aid of the aligning means.

## Patentansprüche

1. System (1) zum Sammeln von Produkten wie landwirtschaftlichen, Gartenbau- oder Gärtnereiprodukten, umfassend eine Förderanlage zum Transport von den Produkten, wobei die Förderanlage folgendes umfasst:
- zwei Wendeeinrichtungen (2, 3)
- ein endloses Förderband (4), das zwischen den zwei Wendeeinrichtungen befestigt ist,
- Antriebsmittel (14) zum Antreiben des endlosen Förderbands, **dadurch gekennzeichnet, dass** jede Wendeeinrichtung (2, 3) mit einer eigenen Unterstützungskonstruktion versehen ist, welche selbstständig unterstützt ist und welche entworfen ist um die Kraft, ausgeübt durch das endlose Förderband, aufzufangen.

2. System nach Anspruch 1, **dadurch gekennzeichnet, dass** die Förderanlage eine Spanneinrichtung hat, womit das endlose Förderband zwischen den beiden Wendeeinrichtungen gespannt und stramm gehalten wird.

3. System nach Anspruch 1 oder 2, **dadurch gekennzeichnet, dass** das System ferner Stützeinrichtungen beinhaltet, zum Stützen des oberen Teils des endlosen Förderbands zwischen den zwei Wendeeinrichtungen.

4. System nach einen oder mehreren der Ansprüche 1-3, **dadurch gekennzeichnet, dass** das endlose Förderband mehrere drahtförmige, in Längsrichtung des Förderbands montierte Elemente umfasst, wobei die zwei Enden jedes drahtförmigen Elements jeweils miteinander verbunden sind.

5. System nach Anspruch 4, **dadurch gekennzeichnet, dass** das endlose Förderband ferner mehrere Abstandhalter umfasst, die die einzelnen drahtförmigen Elemente parallel zueinander in einem bestimmten Abstand miteinander verbinden.

6. System nach Anspruch 5, **dadurch gekennzeichnet, dass** jeder Abstandhalter eine oder mehrere Latten oder Stäbe umfasst, in denen Löcher oder Rillen angebracht sind, wobei die drahtförmigen Elemente in diesen Löchern oder Rillen befestigt werden können.

7. System nach einem oder mehreren der Ansprüche 4-6, **dadurch gekennzeichnet, dass** die Enden der drahtförmigen Elemente mit einem Schnellverschluss miteinander verbunden sind und an verschiedenen Stellen in Längsrichtung der drahtförmigen Elemente miteinander verbunden werden können, sodass das endlose Förderband mit entsprechenden drahtförmigen Elmenten auf verschiedene Längen eingestellt werden kann.

8. System nach einem oder mehreren der vorhergehenden Ansprüche, **dadurch gekennzeichnet, dass** jede Wendeeinrichtung eine Wenderolle umfasst, um welche das endlose Förderband über einen Teil des Mantels der Wenderolle gewendet wird, welche Wenderolle vorzugsweise aus der Wendeeinrichtung genommen werden kann.

9. System nach Anspruch 8, **dadurch gekennzeichnet, dass** jede Wenderolle hinsichtlich eines Untergestelles schwenkbar befestigt ist, wobei die Mittellinie der Wenderolle hinsichtlich der Laufrichtung des endlosen Förderbands schwenkbar ist.

10. System nach einem oder mehreren der vorhergehenden Ansprüche, **dadurch gekennzeichnet, dass** das System des weiteren Richtmittel umfasst, womit jede Wenderolle hauptsächlich im rechten Winkel zur Laufrichtung des endlosen Förderbands gestellt werden kann, sodass das endlose Förderband nicht von der Wenderolle gleitet.

11. System nach Anspruch 10, **dadurch gekennzeichnet, dass** die Richtmittel wenigstens eine Stellschraube, einen hydraulischen Zylinder oder dergleichen umfassen, womit die Mittellinie einer Wenderolle hinsichtlich der Laufrichtung des endlosen Förderbands gedreht und festgehalten werden kann.

12. System nach dem Anspruch 10 oder 11, **dadurch gekennzeichnet, dass** die Stellschraube, der hydraulische Zylinder oder dergleichen von dem Signal eines Sensoren angetrieben wird, der die Position des endlosen Förderbands hinsichtlich der Wenderolle, die von der Stellschraube, dem hydraulischen Zylinder oder dergleichen geschwenkt wird, bestimmt.

13. System nach dem Anspruch 8 oder 9, **dadurch gekennzeichnet, dass** die Wenderolle hinsichtlich des Untergestells frei schwenkbar ist.

14. System nach Anspruch 8, **dadurch gekennzeichnet, dass** die Antriebsmittel einen Elektromotor umfassen, der mindestens eine der Wenderollen antreibt.

15. System nach Anspruch 14, **dadurch gekennzeichnet, dass** mindestens die angetriebene Wenderolle mit zwei Scheiben ausgestattet ist, zwischen denen das endlose Förderband sich befindet.

16. System nach Anspruch 15, **dadurch gekennzeichnet, dass** in den Scheiben parallel zur Mittellinie und in einem Abstand zur Mittellinie, der größer ist als der Abstand der Mittellinie zum Mantel der Wenderolle, Öffnungen angebracht sind, durch den ein Stab oder dergleichen gesteckt werden kann.

17. System nach einem oder mehreren der vorhergehenden Ansprüche, **dadurch gekennzeichnet, dass** das System zwei Stützmittel umfasst, zum Stützen des unteren Teils des endlosen Förderbands zwischen den zwei Wendeeinrichtungen.

18. System nach einem oder mehreren der Ansprüche 3-17, **dadurch gekennzeichnet, dass** das erste und/oder zweite Stützmittel ein Gestell umfasst, das auf den Boden gestellt werden kann, und einen oder mehr an dem Gestell befestigte Stützarme, die hinsichtlich des Gestells in der Höhe verstellbar sind.

19. System nach Anspruch 18, **dadurch gekennzeichnet, dass** an der Unterseite des Gestells Spitzen befestigt sind, die in den Boden gesteckt werden können.

20. System nach Anspruch 18 oder 19, **dadurch gekennzeichnet, dass** der Stützarm oder die Stützarme hinsichtlich des senkrechten Stützbalkens des Gestells in hauptsächlich horizontaler Richtung schwenkbar befestigt sind.

21. System nach einem oder mehreren der vorhergehenden Ansprüche, **dadurch gekennzeichnet, dass** in der Nähe von wenigstens dem Ende der Förderanlage, in der Richtung, in dem ein Produkt befördert wird, eine Beseitigungseinrichtung angebracht ist, womit ein Produkt, das sich dem Ende der Förderanlage nähert, von dem endlosen Förderband entfernt wird.

22. System nach Anspruch 21, **dadurch gekennzeichnet, dass** die Beseitigungseinrichtung wenigstens einen Arm umfasst, der über und schräg über der oberen Fläche des oberen beziehungsweise unteren Teils des endlosen Förderbands positioniert ist, wobei der Abstand zwischen dem Arm und der oberen Fläche des endlosen Förderbands kleiner ist als der Durchmesser des Land- oder Gartenbauproduktes.

23. System nach einen oder mehreren der Ansprüche 2-22, **dadurch gekennzeichnet, dass** die Spanneinrichtung einen oder mehrere hydraulische Zylinder umfasst, die mindestens die Wenderollen der beiden Wendeeinrichtungen auseinander ziehen, sodass das endlose Förderband unter einer gewissen Spannung steht.

24. System nach Anspruch 23, **dadurch gekennzeichnet, dass** der hydraulische Zylinder zwischen dem Untergestell und einem Teil der Wendeeinrichtung, an der die Wenderolle befestigt ist, montiert ist, wobei der durch den hydraulischen Zylinder angetriebene Teil hinsichtlich des Untergestells beweglich ist, sodass die Wenderolle weg von und in die Richtung der sich an dem anderen Ende des Förderbands befindende Wendeeinrichtung bewegt werden kann.

25. Verfahren zum Sammeln von Landbau-, Gartenbau- oder Gärtnereiprodukten, wobei die Produkte mit einer Förderanlage eines Systems nach einem oder mehreren der Ansprüche 1-24 gesammelt werden.

26. Verfahren nach Anspruch 25, **dadurch gekennzeichnet, dass** die Produkte während des Sammelns in zwei Klassen getrennt werden, wobei das Produkt der einen Klasse auf den oberen Teil des endlosen Förderbands und das Produkt der anderen Klasse auf den unteren Teil des endlosen Förderbands gelegt wird, sodass das auf das endlose Förderband gelegte Produkt der einen Klasse zum einen Ende, das Produkt der anderen Klasse zum anderen Ende der Förderanlage transportiert wird.

27. Verfahren zum Umstellen einer Förderanlage, während Benutzung eines Systems (1) nach einem oder mehreren der Ansprüche 1-24, **gekennzeichnet durch** die folgenden Schritte:
- das Wegnehmen der Spannung des endlosen Förderbands,
- das Aufrollen des endlosen Förderbands, wobei das endlose Förderband eventuell von einer oder beiden der Wendeeinrichtungen (2, 3) entfernt ist,
- das Umstellen der zwei separate Wendeeinrichtungen,
- das Ausrollen des endlosen Förderbands, und
- das Aufspannen des endlosen Förderbands zwischen den zwei Wendeeinrichtungen, wenn erforderlich nachdem das endlose Förderband auf eine Wendeeinrichtung, wovon das endlose Förderband entfernt ist, montiert ist.

28. Verfahren zum umstellen einer Förderanlage, während Benutzung eines Systems (1) nach einem oder mehreren der Ansprüche 1-24, **gekennzeichnet durch** die folgenden Schritte:
- das Wegnehmen der Spannung des endlosen Förderbands,
- das Entfernen des endlosen Förderbands von den zwei Wendeeinrichtungen,
- das Umstellen der angetriebenen und nicht angetriebenen Wendeeinrichtungen,
- das Montieren des endlosen Förderbands oder eines zweiten endlosen Förderbands auf den Wendeeinrichtungen, und
- das Aufspannen des endlosen Förderbands auf den Wendeeinrichtungen mit Hilfe der Spannmittel.

29. Verfahren nach Anspruch 27 oder 28, **gekennzeichnet durch** das im Anschluss Folgen einer oder mehrere der folgenden Schritte:
- das Umstellen und Aufstellen der Stützmittel zwischen den zwei Wendeeinrichtungen,
- das Setzen der Mittellinie jeder Wenderolle rechtwinklig zur Laufrichtung des endlosen Förderbands mit Hilfe der Richtmittel.

## Revendications

1. Système (1) pour le rassemblement des produits agricoles, des produits horticoles ou des produits pépinière, comprenant un transporteur roulant pour le transport des produits, le transporteur roulant comprenant:
- deux dispositifs tournants (2, 3)
- un convoyeur (4), posé entre les deux dispositifs de retour, et
- des moyens d'actionnement pour actionner dans une certaine direction de roulement le convoyeur,
**caractérisé en ce que**, chaque dispositif tournant est pourvu de sa propre construction d'appuie, qui est supporté indépendante et est designé pour absorber le force exercé par le convoyeur.

2. Système selon revendication 1, **caractérisé en ce que** le système comprend des dispositifs de serrage avec lesquels le convoyeur entre les deux dispositifs tournants sera mis et tenu en tension.

3. Système selon revendication 1 ou 2, **caractérisé en ce que** le système comprend en plus des premiers moyens de support pour pouvoir soutenir une partie marchante supérieure du convoyeur entre les deux dispositifs tournants

4. Système selon une ou plus d'une des revendications 1-3, **caractérisé en ce que** le convoyeur comprend plusiers éléments filiformes s'étendant dans le sens de la longueur du convoyeur, de manière que les deux bouts de chaque élément filiforme se sont joints.

5. Système selon revendication 4, **caractérisé en ce que** le convoyeur comprend plusieurs dispostifs d'écartement, reliant parallèllement les deux éléments filiformes séparés, à une certaine distance.

6. Système selon revendication 5, **caractérisé en ce que** chaque dispositf d'écartement comprend plusiers lattes ou des barres dans lesquelles sont mis des trous ou des fentes, servant à mettre les éléments filiformes dans ces trous ou ces fentes.

7. Système selon une ou plus d'une des revendications 4-6, **caractérisé en ce que** les bouts des éléments filiformes se sont fixés d'une mécanisme de fermeture rapide et peuvent être unis à plusieurs points dans le long des éléments filiformes, de manière que le convoyeur, avec les éléments filiformes analogues, peut être formé en différentes longueurs.

8. Système selon une ou plus d'une des revendications précédentes, **caractérisé en ce que** chaque dispositif tournant comprend un rouleau de retour, autour duquel a été tourné le convoyeur à l'aide d'une partie du revêtement du dispositif de retour, dans lequel le rouleau de retour préférablement peut enlevé du dispositif tournant.

9. Système selon revendication 8, **caractérisé en ce que** chaque rouleau de retour a été fixé virant à l'égard d'un châssis, de sorte que la ligne axiale du rouleau de retour reste virant par rapport à la direction de roulement du convoyeur

10. Système selon une ou plus d'une des revendications précédentes, **caractérisé en ce que** le système comprend en plus des appareils de pointage, avec lesquels chaque rouleau de retour peut être mis essentiellement en équerre de la direction de roulement du convoyeur, de sorte que le convoyeur ne roule pas du rouleau de retour.

11. Système selon revendication 10, **caractérisé en ce que** les appareils de pointage comprennent du moins un vis de réglage, cylindre hydraulique ou d'autres choses de ce genre, avec lesquels la ligne axiale d'un rouleau de retour peut être tourné et tenu par rapport à la direction de roulement du convoyeur.

12. Système selon une des revendications 10 ou 11, **caractérisé en ce que** le vis de réglage, le cylindre hydraulique ou d'autres choses de ce genre seront commandé par un signal d'un détecteur ayant la fonction de déterminer la position du convoyeur par rapport au vis de réglage, le cylindre hydraulique ou d'autres choses de ce genre du rouleau de retour virant.

13. Système selon revendication 8 ou 9, **caractérisé en ce que** le rouleau de retour vire librement par rapport au châssis.

14. Système selon revendication 8, **caractérisé en ce que** les moyens d'actionnement munis d' un moteur électrique, actionnent au moins l'une des rouleaux de retour.

15. Système selon revendication 14, **caractérisé en ce que** le rouleau de retour doit être muni du moins de deux brides entre lesquelles se trouve le convoyeur.

16. Système selon revendication 15, **caractérisé en ce que** les brides, parallèllement à la ligne axiale et à une distance de la ligne axiale plus grande que la distance de la ligne axiale au revêtement du rouleau de retour, sont munis d'ouvertures dans les quelles une barre ou chose pareille peut être introduite.

17. système selon une ou plus d'une des revendications précédentes, **caractérisé en ce que** le système comprend des moyens de support secondaires pour le soutien d'une partie inférieure du convoyeur se trouvant entre les deux dispositifs de retour.

18. Système selon une ou plus d'une des revendications 3-17, **caractérisé en ce que** les premiers et /ou les deuxièmes moyens de support comprennent un châssis qui peut être monté par terre et comprennent aussi un un ou deux bras de support fixés au chassis réglables en hauteur.

19. Système selon revendication 18 ou 19, **caractérisé en ce que** le dessous du châssis comprend des points qui peuvent être mis au sol.

20. Système selon les revendications 18 ou 19, **caractérisé en ce que** un ou plus d'un de bras de support a mis en général horizontalement de manière virante par rapport à un montant vertical du châssis.

21. Système selon une ou plus d'une des revendications précédentes, **caractérisé en ce que** près ou du moins à la fin du transporteur dans le sens du transport des produits se trouvent des moyens d'enlèvement permettant l'enlèvement du transporteur le produit agricole ou horticole arrivant à la fin du convoyeur.

22. Système selon revendication 21, **caractérisé en ce que** les moyens d'enlèvement comprennent du moins un bras s'étendant obliquement et au dessus de la surface d'une partie supérieure ou inférieure du convoyeur, de sorte que la distance entre le bras et la partie supérieure du convoyeur est plus petite que le diamètre du produit agricole ou horticole.

23. Système selon une ou plus d'une des revendications 2-22, **caractérisé en ce que** les dipositifs de serrage comprennent un cylindre ou plus d'un cylindre hydraulique, s'étirant du moins les rouleaux de retour de chaque dispositif de retour, de telle manière qu'une certaine tension se produit dans le convoyeur

24. Système selon revendication 23, **caractérisé en ce que** le cylindre hydraulique a été posé entre le châssis et une partie du dispositif de retour à la quelle le rouleau de retour a été fixé, à savoir que la partie du dispositif tournant à l'aide d'un cylindre hydraulique est mobile par rapport au châssis, de telle manière que le rouleau de retour peut être bougé de et en direction du dispositif de retour se trouvant de l'autre côté du transporteur.

25. Méthode pour accumuler des produits agricoles, des produits horticoles ou des produits pépinière, dans laquel les produits sont rassemblé avec un transporteur roulant d'un système selon une ou plus d'une des revendications 1-24.

26. Méthode selon revendication 25, **caractérisé en ce que** les produits sont divisés en deux classes distinguées à savoir que les produits d'une classe sont posées sur la partie supérieure du convoyeur et les produits d'une autre classe sont posées sur la partie inférieure du convoyeur, de sorte que le produit d'une classe sera transporté à un bout du transporteur et que le produit d'une autre classe sera transporté à l'autre bout du transporteur.

27. Méthode pour transférer un transporteur durant usage d'un système selon une ou plus d'une des revendications 1-24, **caractérisé par** des stades suivantes:
- détendre le tension dans le convoyeur,
- enrouler le convoyeur, eventuel après le convoyeur est enlevé de un ou les deux des dispositifs tournant,
- transférer des deux dispositifs tournant separé,
- dérouler le convoyeur, et
- mettre le convoyeur en tension entre les deux dispositifs tournants, quand necessaire après le convoyeur est mis dans un dispositif tournant duquel le convoyeur est enlevé.

28. Méthode pour transférer un transporteur durant usage d'un système selon une ou plus d'une des revendications 1-24, **caractérisé par** des stades suivantes:
- détendre le tension dans le convoyeur,
- enlever le convoyeur de deux dispositifs tournant,
- transférer le dispositif tournant actionné et le dispositif tournant non-actionné,
- mettre le convoyeur ou un deuxième convoyeur à les dispositifs tournant,
- mettre le convoyeur ou le deuxième convoyeur en tension entre les deux dispositifs tournants, à l'aide des dipositifs de serrage.

29. Méthode selon revendication 27 ou 28, **caractérisé par le fait que** une ou plus d'une des stades suivantes sont effectué:
- transférer et mettre en position les moyens de support secondaires entre les deux dispositifs de retour,
- mettre la ligne axiale de chaque rouleau de retour en équerre dans le sens de marche du transporteur à l'aide des moyens de réglage.
